Europäisches Patentamt

European Patent Office

Office européen des brevets

(19)

(11) Veröffentlichungsnummer: **0 174 349**
**B1**

(12) **EUROPÄISCHE PATENTSCHRIFT**

(45) Veröffentlichungstag der Patentschrift :
25.05.88

(21) Anmeldenummer : 85901400.3

(22) Anmeldetag : 18.02.85

(86) Internationale Anmeldenummer :
PCT/EP 85/00053

(87) Internationale Veröffentlichungsnummer :
WO/8503694 (29.08.85 Gazette 85/19)

(51) Int. Cl.⁴ : **C 02 F 1/66**, B 01 D 53/34

(54) VORRICHTUNG ZUR NEUTRALISATION VON SAUREN KONDENSATEN.

Verbunden mit 85101775.6/0162195 (europäische Anmeldenummer/Veröffentlichungsnummer) durch Entscheidung vom 25.09.86.

(30) Priorität : 20.02.84 DE 3406097

(43) Veröffentlichungstag der Anmeldung :
19.03.86 Patentblatt 86/12

(45) Bekanntmachung des Hinweises auf die Patenterteilung : 25.05.88 Patentblatt 88/21

(84) Benannte Vertragsstaaten :
CH DE FR IT LI NL SE

(56) Entgegenhaltungen :
EP-A- 0 076 898
AT-B- 192 345
US-A- 4 378 293
Patent Abstracts of Japan, vol. 7, no. 66 (C-157)(1211), 18. March 1983 & JP-A-58293 (MATSUSHITA DENKI SANGYO K.K.) 05.01.1983
Patent Abstracts of Japan, vol. 7, no. 242, (C-192)(1387), 27. October 1983 & JP-A-58 131 194 (MATSUSHITA DENKI SANGYO K.K.) 04.08.1983

(73) Patentinhaber : Krause, Willibald
Unterboihinger Strasse 29
D-7317 Wendlingen (DE)

(72) Erfinder : ROESKE, Wolfgang
Im Günztal 14
D-8870 Günzburg (DE)
Erfinder : GÖDDEKE, Heinrich
Parkstrasse 19
D-5407 Boppard (DE)

(74) Vertreter : Weickmann, Heinrich, Dipl.-Ing. et al
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel
Postfach 860820
D-8000 München 86 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Vorrichtung zur Neutralisation von Rauchgas- und Abgaskondensaten unter Verwendung von Magnesiumoxid.

Energieeinsparung ist eine der wichtigsten Aufgaben unserer Zeit. Neben der Einsparung von Brennstoffen spielt heute aber auch die Erhaltung unserer Umwelt eine entscheidende Rolle. Die Bedeutung von Energieeinsparung und Umweltschutz wird durch eine Vielzahl von Gesetzen und Verordnungen unterstrichen.

So werden z. B. vom Gesetzgeber bestimmte Mindestanforderungen an die Wärmedämmung von Gebäuden, an den Wirkungsgrad von Heizkesseln und an die Belastung der Luft durch Rauch- und Abgase gestellt. Die größten Möglichkeiten zur Energieeinsparung liegen im Bereich der privaten Haushalte. Der Anteil des Energieverbrauchs im haushaltlichen Bereich am Gesamtenergieverbrauch in der Bundesrepublik Deutschland beträgt ca. 45 %. Dieser hohe Anteil zeigt deutlich die Notwendigkeit und den Nutzen energiesparender Maßnahmen auf diesem Sektor.

In den letzten zehn Jahren ist die Optimierung von Heizkesseln durch die Einführung neuer Brennertypen, verbunden mit elektronischen Meß- und Regelsystemen, weitgehend durchgeführt worden. Eine zusätzliche Steigerung der Wirkungsgrade moderner Heizkessel erfolgt durch die Nutzung der Kondensationswärme des Abgases, d. h. über eine Nutzung des Brennwertes. Für diese Aufgabe wurde ein völlig neuer Kesseltyp, der Brennwertkessel, entwickelt. Dabei wird die im Abgas noch vorhandene Restwärme nahezu vollständig ausgenutzt, indem das Abgas bis unter den Taupunkt abgekühlt wird. Die dabei freiwerdende Kondensationswärme (latente Wärme) ergibt, zusammen mit der noch gewonnenen fühlbaren Wärme, eine Wirkungsgradsteigerung von 20 bis 30 % gegenüber dem konventionellen Betrieb. Durch nachgeschaltete Wärmeaustauscher wird das Rauch- und Abgas entweder in den Feuerstätten selbst oder nachgeschaltet im Schornstein abgekühlt. Auch bei Sorptionswärmepumpen mit feuerbeheizten Austreibern und Kompressionswärmepumpen mit verbrennungsmotorischem Antrieb treten vergleichbare Verhältnisse auf.

Der zu erwartende Kondensatanfall hängt vom Umfang der Kondensation ab. Bei vollständiger Kondensation fallen etwa folgende Kondensatmengen an :

1,0 kg Kondensat/kg Heizöl

1,4 kg Kondensat/m³ Erdgas.

Bezogen auf die Heizleistung liegt der zu erwartende maximale Kondensatanfall bei etwa 0,08 kg/kWh. In der Praxis liegen diese Werte infolge nur partieller Kondensation um etwa 50 % niedriger. Die Menge des anfallenden sauren Kondensats ist also nicht unerheblich.

Sie beträgt z. B. bei einem Heizölverbrauch von 4 000 l pro Heizperiode etwa 2 000 bis 25 00 l. Das anfallende Kondensat ist mit wasserlöslichen Bestandteilen der Rauch- und Abgase angereichert. Hierbei handelt es sich hauptsächlich um Schwefeloxide ($SO_x$) und Stickstoffoxide ($NO_x$), die zu einer Senkung des pH-Wertes des Kondensats beitragen. Außerdem enthält es gelöste Kohlenwasserstoffe, Teer und Ruß. Es wird somit durch die Kondensation ein großer Teil der umweltbelastenden Gase aus dem Rauch- und Abgas entfernt.

Die pH-Werte des anfallenden Kondensats betragen beim Einsatz von Heizöl EL (mit einem Schwefelgehalt von 0,3 Gew.-%) etwa pH 2 und bei Erdgas etwa pH 3 bis 4. Es handelt sich hierbei um stark saure wäßrige Lösungen. Da nach dem Regelwerk der Abwassertechnischen Vereinigung e. V. (ATV), Arbeitsblatt A 115, Ausgabe Jan. 1983 « Hinweise für das Einleiten von Abwasser in eine öffentliche Abwasseranlage », erst ein pH-Wert von 6,5 bis 10 bei der Einleitung in öffentliche Abwasseranlagen als unbedenklich anzusehen ist, bestehen gegen die Einleitung dieser sauren Kondensate aus wasserwirtschaftlicher Sicht Bedenken und zwar sowohl wegen der befürchteten Werkstoffkorrosion der Entwässerungssysteme (Angriff und Zerstörung der Betonableitungsrohre) als auch wegen der möglichen Störung der biologischen Stufe von Kläranlagen.

Deshalb müssen die Kondensate vor Ableitung in das öffentliche Abwassersystem neutralisiert werden.

Die Neutralisation des Kondensates nur durch Vermischen mit Trinkwasser ist zu teuer, da für eine vollständige Neutralisation durch die Karbonathärte z. B. bei Wasser mit einer Karbonathärte von 10° dKH pro 1 Kondensat 90 l Wasser nötig wäre. Die Neutralisation mit häuslichem Abwasser ist nicht ausreichend und dazu noch unzuverlässig.

Bisher wurde die Neutralisation der anfallenden sauren Kondensate mit Natronlauge oder Soda-Lösung vorgenommen. Der Nachteil dabei ist, daß der Umgang mit Natronlauge und Sodalösung besonderen Vorsichtsmaßnahmen nach der Arbeitsstoffverordnung (laugen- und säurefeste Schutzkleidung, Schutzhandschuhe, Schutzbrille etc.) unterliegt und für den häuslichen Bereich zu gefährlich und aufwendig ist. Weiterhin muß die Zugabe von Natronlauge oder Soda-Lösung über Dosiereinrichtungen wie elektrisch betätigte Magnetventile, Dosierpumpen oder ähnliche Aggregate erfolgen. Vorratsbehälter für die Natronlauge bzw. Soda-Lösung, Auffang- und Reaktionsbehälter mit Niveauregelungen und Ablaßventilen sind außerdem notwendig. Weiterhin sind die Kosten für die Natronlauge oder die Soda-Lösung nicht unerheblich.

Aufgabe der Erfindung war es nun, die oben erläuterten Probleme der Kondensat-Neutralisation zu lösen und die Nachteile der bisherigen Verfahren, auszuschließen.

Diese Aufgabe wird gelöst durch eine Vorrichtung zur Neutralisation von Rauchgas- und Abgaskondensaten, die dadurch gekennzeichnet ist, daß in einen Durchflußbehälter in der vorgesehenen Strömungsrichtung nacheinander eine Quarzkiesschicht, eine Aktivkohleschicht und eine Magnesiumoxid/Magnesiumcarbonatschicht angeordnet sind. Die erfindungsgemäße Vorrichtung ermöglicht es, einfach, sicher und ungefährlich anfallendes Kondensat zu neutralisieren und ist auch von Laien zu verstehen und zu handhaben. Der technische Aufwand ist gering und die Vorrichtung ist von der Investitions- und Betriebskostenseite her wesentlich günstiger als die bisherigen Verfahren zur Kondensat-Neutralisation.

Die erfindungsgemäße Vorrichtung ist ein Durchflußbehälter, in dem das saure Kondensat über drei verschiedene Schichten geleitet und dadurch neutralisiert wird. Zuerst wird das Kondensat durch eine Quarzkiesschicht geleitet. Dabei wird es gleichmäßig und fein verteilt und in geringem Maße auch mechanisch gereinigt. Dann wird es über eine Aktivkohleschicht geleitet. Die Aktivkohle ist in der Lage, die im Kondensat befindlichen Kohlenwasserstoffe, wie z. B. Heizöl, Verbrennungsrückstände und Teer, zu adsorbieren. Dadurch wird die Oberfläche des Neutralisationsgranulats nicht belegt und bleibt für die pH-Wert-Neutralisation aktiv.

Als Neutralisationsmittel wird Magnesiumoxid/Magnesiumcarbonat verwendet. Hierunter wird eine Mischung aus Magnesiumoxid und Magnesiumcarbonat verstanden, die zweckmäßig 10 bis 90 Mol-% Magnesiumoxid und entsprechend etwa 90 bis 10 Mol-% Magnesiumcarbonat enthält. Die Mischung liegt zweckmäßig als Granulat vor, wobei jedes Granulatkorn MgO und $MgCO_3$ enthalten kann oder jeweils nur aus einem dieser Bestandteile bestehende Granalien miteinander gemischt sind. Besonders geeignet ist ein kugeliges, poröses, synthetisch aus Magnesiumverbindungen bestehendes, in Wasser schwer lösliches Material, das überwiegend Magnesiumoxid enthält mit stabiler Kornstruktur und hoher Reaktionsfähigkeit.

Bei der Neutralisation wird nur das Magnesiumoxid-/Magnesiumcarbonat-Granulat verbraucht, das abhängig von der Durchflußmenge und dem pH-Wert des sauren Kondensats ersetzt werden muß. Das bei der Neutralisation entstehende Magnesiumsulfat ist und bleibt voll wasserlöslich. Eine Störung durch Ablagerungen findet deshalb nicht statt.

Dieses Material ist einfach zu handhaben und ungefährlich. Besondere Vorsichtsmaßnahmen brauchen nicht beachtet zu werden. Das Material stellt, in Gegensatz zu Natronlauge oder Soda-Lösung, keine Gefahr für den Laien dar.

Andere feste Neutralisationsmittel wie Kalziumcarbonat (Marmorkies, Kalkstein) oder Magnesiumverbindungen, die einen hohen Anteil an Kalzium enthalten, haben den Nachteil, daß sie an ihrer Oberfläche durch den relativ hohen Sulfat-Gehalt der Kondensate sehr schnell durch ausfallendes und die Oberfläche der Granulate belegendes Kalziumsulfat inaktiv werden. Diesen Nachteil hat das Magnesiumoxid/Magnesiumcarbonat nicht.

Für die Kondensat-Neutralisation hat sich eine Korngröße von 1 bis 10 mm und bevorzugt von 2,0 bis 5,0 mm, als geeignet erwiesen. Die notwendige Schichthöhe und Menge des Materials hängen von der jeweiligen Durchflußmenge und vom pH-Wert des Kondensats ab. Durch eine entsprechende Mindestschichthöhe und Mindestmenge des Neutralisationsgranulats sowie eine ausreichende Verweilzeit kann eine sichere Neutralisation von sauren Kondensaten gewährleistet werden. Die Werte des abfließenden Kondensats liegen bei entsprechenden Schichthöhen und Verweilzeiten bei pH-Werten über pH 6,5 insbesondere bei etwa pH 7,5 bis 8,5. Hierbei ist es gleichgültig, wie niedrig der Ausgangs-pH-Wert (z. B. Gas-Kondensat pH 3 bis 4, Heizöl EL-Kondensat pH 2) war oder ob schwankende pH-Werte im Kondensat vorkommen. Eine Verweilzeit von etwa einer halben Stunde hat sich dabei als zweckmäßig erwiesen.

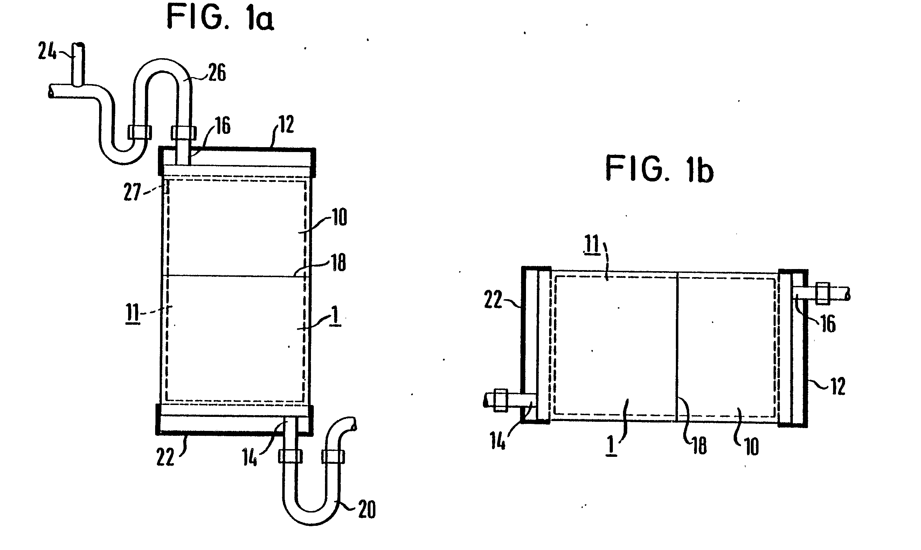

Eine Ausführungsform der erfindungsgemäßen Vorrichtung für die Kondensat-Neutralisierung ist in Fig. 1 dargestellt.

Der Durchflußbehälter 1 besteht aus einem Zylinder 10, der vorzugsweise aus transparentem Kunststoff wie Polyethylen oder PVC gefertigt ist. Der Zylinder 10 hat einen Zulauf 14. Über diesen Zulauf 14 kann das saure Kondensat entweder frei zufließen oder es kann über eine Kondensatförderpumpe in den Zylinder 10 gedrückt werden. Der Zylinder 10 hat einen Boden 22 und ist oben mit einem abschraubbaren Deckel 12 versehen, der gegebenenfalls verplombt sein kann. In dem Deckel 12 befindet sich der Ablauf 16. Hinter dem Ablaufstutzen kann ein Anschluß 24 für Verdünnungswasser installiert sein. Der Durchfluß erfolgt vom Boden des Behälters über den Zulauf 14 zum Ablauf 16 im Deckel 12. Es erfolgt also eine Durchströmung von unten nach oben. Sowohl vor dem Zulaufstutzen als auch nach dem Ablaufstutzen können Geruchsverschlüsse 20, 26 installiert werden.

Der Zulauf- 14 und Ablaufstutzen 16 sind nicht zentral, sondern seitlich im Boden 22 und Deckel 12 des Zylinders 10 angebracht. Dadurch besteht die Möglichkeit, den Zylinder 10 auch längs durchströmen zu lassen (Fig. 1b), falls kein entsprechend hohes Gefälle vorhanden ist. Dazu wird der Durchflußbehälter so angebracht, daß sich der Zulaufstutzen 14 an der tiefsten und der Ablaufstutzen 16 an der höchsten Stelle befindet. Der Durchfluß erfolgt dann diagonal. Der Zulauf- 14 und Ablaufstutzen 16 können aber auch zentral im Boden 22 und Deckel 12 des Zylinders 10 angebracht sein.

Bevorzugt ist an der Außenwand des transparenten Zylinders 10 eine Marke 18 in Form eines Ringes angebracht. Diese Markierung zeigt den Mindeststand an Neutralisations-Granulat an. Ist das Material auf diese Höhe herabgesunken, muß der Zylinder mit neuem Neutralisationsmaterial aufgefüllt werden. Am oberen Teil des Zylinders 10 kann innen eine Vorrichtung 27 angebracht sein, die anzeigt, ob neutrales oder saures Kondensat die Durchflußapparatur verläßt. Diese Anzeige kann durch Farbänderung eines Indikators oder ein anderes Signal erfolgen.

Im Zylinder 10 des Durchflußbehälters befinden sich die drei zur Neutralisation erforderlichen Schichten. In einer bevorzugten Ausführungsform werden für eine bequeme und leichte Handhabung die drei Stoffe in einer gemeinsamen oder auch getrennten Patrone 11 schichtweise in entsprechenden Mengen und Schichthöhen angeordnet. Dabei wird die Menge und Schichthöhe der einzelnen Komponenten nach dem Kondensatanfall einer oder mehrerer Heizperioden festgelegt. Als Behälter wird bevorzugt ein allseits geschlossener Siebkörper 7 aus Kunststoffgewebe verwendet. Zweckmäßigerweise stellt er ein gitterartiges Gebilde dar, dessen Poren kleiner sind als die Teilchen der in der Patrone enthaltenen Schichten.

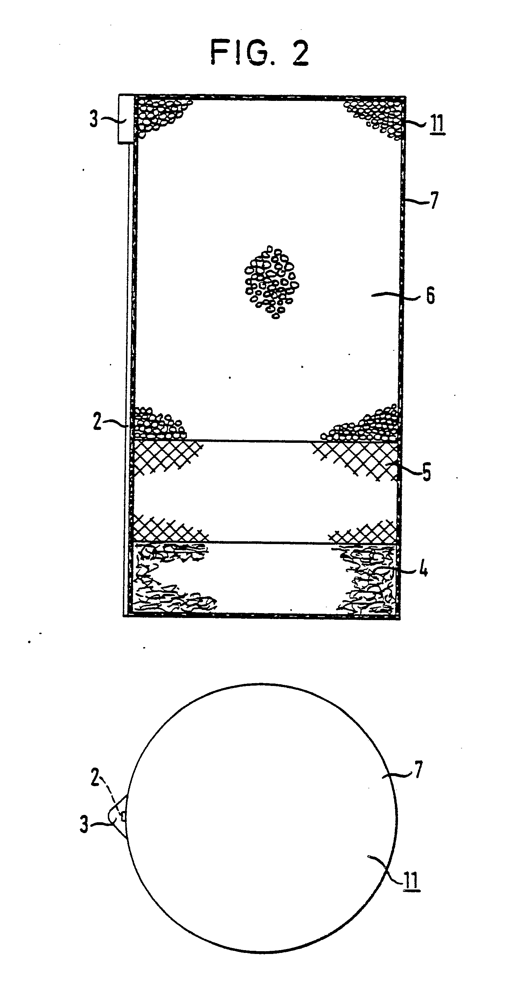

Eine bevorzugte Ausführungsform der auswechselbaren Neutralisations-Patrone 11 ist in Fig. 2 dargestellt. Dabei hat der Siebkörper 7 eine Führung 2 und am oberen Ende einen Nocken 3, damit die einzelnen Schichten der Nachfüllpatrone immer in der richtigen Reihenfolge in dem Durchflußbehälter angeordnet sind. In dem Siebkörper 7 sind nacheinander angeordnet eine Quarzkiesschicht 4, eine Aktiv-Kohleschicht 5 und eine Magnesiumoxidschicht 6. Je nach Kondensatanfall (z. B. bei größeren Brennwertkesseln) können auch zwei oder mehrere Neutralisations-Patronen übereinander oder nebeneinander in größeren Durchflußbehältern angeordnet werden.

Um zu gewährleisten, daß der Abstand zwischen Zylinder und Patrone möglichst gering ist und das saure Kondensat nicht durch diesen Hohlraum fließen kann, kann in dem Zylinder 10 eine Einrastmöglichkeit für die Nocke der Neutralisations-Patrone vorgesehen sein. Durch die Führung mit Nocke ist außerdem gesichert, daß die Patrone immer richtig, d. h. mit der richtigen Schichtfolge, eingelegt wird.

Nach einer bestimmten Laufzeit (eine oder mehrere Heizperioden) oder dann, wenn die Mindestschichthöhe an Neutralisations-Granulat erreicht ist, muß die Neutralisations-Patrone ausgewechselt und durch eine neue ersetzt werden. Der Siebkörper und die darin enthaltenen Stoffe, Quarzkies, Aktivkohle und das restliche Neutralisations-Granulat, können ohne Bedenken in die allgemeine Müllentsorgung gegeben werden, da keine umweltbelastenden Stoffe vorliegen. Sollten möglicherweise größere Mengen von Kohlenwasserstoffen aus dem Kondensat von der Aktivkohle adsorbiert worden sein, so sind diese so fest an der Aktivkohle gebunden, daß sie selbst durch kräftiges und längeres Rühren in Wasser nicht wieder abgegeben werden.

Die erfindungsgemäße Vorrichtung ermöglicht es auf einfache, gefahrlose und wirtschaftliche Weise, Rauchgas- und Abgas-Kondensat zu neutralisieren. Durch die einfache Handhabung ist sie auch im häuslichen Bereich anwendbar. Sie führt zu einer Verringerung der Schadstoffbelastung im Abwasser, während sie keine umweltbelastenden Rückstände schafft.

**Patentansprüche**

1. Vorrichtung zur Neutralisation von Rauchgas- und Abgas-Kondensaten, dadurch gekennzeichnet, daß in einem Durchflußbehälter in der vorgesehenen Strömungsrichtung nacheinander angeordnet sind eine Quarzkiesschicht, eine Aktivkohleschicht und eine Magnesiumoxid/Magnesiumcarbonatschicht.

2. Vorrichtung nach Anspruch 1, dadurch gekennzeichnet, daß das Magnesiumoxid/Magnesiumcarbonat in Form eines Granulates vorliegt mit einer kugeligen, porösen Kornstruktur.

3. Vorrichtung nach Anspruch 2, dadurch gekennzeichnet, daß das Magnesiumoxid/Magnesiumcarbonatgranulat eine Korngröße von 1 bis 10 mm, vorzugsweise von 2 bis 5 mm hat.

4. Vorrichtung nach einem der vorhergehenden Ansprüche, dadurch gekennzeichnet, daß die 3 Schichten in Form einer Nachfüllpatrone vorliegen, die aus einem Siebkörper aus Kunststoffgewebe, der allseitig geschlossen ist, besteht, in dem die Schichten nacheinander angeordnet sind.

5. Vorrichtung nach Anspruch 4, dadurch gekennzeichnet, daß der Siebkörper eine Führung und an einem Ende einen Nocken zum arretieren hat.

6. Durchflußbehälter zur Neutralisation von Rauchgas- und Abgaskondensaten, gekennzeichnet durch einen Zylinder (10), der oben mit einem abschraubbaren Deckel (12) versehen ist, einen Zulauf (14) im Boden, der abschraubbar sein kann, des Behälters und einen Ablauf (16) im Deckel des Behälters und zur Aufnahme einer Neutralisationspatrone (11) eingerichtet ist, wobei der Zylinder (10) eine Führung und eine Einrastmöglichkeit für die Nocke und die Führung der Patrone (11) hat.

7. Durchflußbehälter nach Anspruch 6, dadurch gekennzeichnet, daß der Zylinder aus transparentem Kunststoff besteht.

8. Durchflußbehälter nach Anspruch 7 oder 8, dadurch gekennzeichnet, daß vor dem Zulaufstutzen (14) und nach dem Ablaufstutzen (16) Geruchsverschlüsse (20, 26) angebracht sind.

9. Durchflußbehälter nach Anspruch 6, dadurch gekennzeichnet, daß im Zylinder (10) eine Vorrichtung (27) vorgesehen ist, die anzeigt, ob saures oder neutrales Kondensat den Durchflußbehälter verläßt.

**Claims**

1. Device for the neutralisation of flue gas and exhaust gas condensates, characterised in that, in a flowthrough container, there are successively arranged, in the intended direction of flow, a quartz gravel layer, an active charcoal layer and a magnesium oxide/magnesium carbonate layer.

2. Device according to claim 1, characterised in that the magnesium oxide/magnesium carbonate is present in the form of a granulate with a spheroidal, porous grain structure.

3. Device according to claim 2, characterised in that the magnesium oxide/magnesium carbonate has a grain size of 1 to 10 mm, preferably of 2 to 5 mm.

4. Device according to one of the preceding claims, characterised in that the 3 layers are present in the form of a refillable cartridge which consists of a sieve body of synthetic resin fabric which is closed on all sides in which the layers are arranged next to one another.

5. Device according to claim 4, characterised in that the sieve body has a guide and a cam on one end for stopping.

6. Flowthrough container for the neutralisation of flue gas and exhaust gas condensates, characterised by a cylinder (10) which is provided above with a screwably removable cover (12), an inlet (14) in the bottom, which can be screwably removed, of the container and a run-off (16) in the cover of the container and is arranged for the reception of a neutralisation cartridge (11), whereby the cylinder (10) has a guide and an engagement possibility for the cam and the guiding of the cartridge (11).

7. Flowthrough container according to claim 6, characterised in that the cylinder consists of transparent synthetic resin.

8. Flowthrough container according to claim 7 or 8, characterised in that, before the inlet connection piece (14) and after the outlet connection piece (16), odour connections (20, 26) are applied.

9. Flowthrough container according to claim 6, characterised in that, in the cylinder (10), a device (27) is provided which indicates whether acidic or neutral condensate leaves the flowthrough container.

**Revendications**

1. Dispositif pour la neutralisation de condensats de gaz de fumée et d'effluents gazeux, caractérisé en ce qu'une couche de gravillons de quartz, une couche de charbon actif et une couche d'oxyde de magnésium/carbonate de magnésium sont agencées successivement dans un réservoir de circulation dans le sens d'écoulement prévu.

2. Dispositif selon la revendication 1, caractérisé en ce que l'oxyde de magnésium/carbonate de magnésium se présente sous forme de granulés ayant une structure granulaire sphérique, poreuse.

3. Dispositif selon la revendication 2, caractérisé en ce que les granulés d'oxyde de magnésium/carbonate de magnésium présentent une granulométrie de 1 à 10 mm, de préférence de 2 à 5 mm.

4. Dispositif selon l'une quelconque des revendications précédentes, caractérisé en ce que les trois couches se présentent sous forme d'une cartouche rechargeable, qui consiste en un corps de tamisage à partir d'un tissé en matière synthétique, fermé sur tous les côtés, dans lequel les couches sont agencées successivement.

5. Dispositif selon la revendication 4, caractérisé en ce que le corps de tamisage comporte un guidage et sur une extrémité une came en vue du blocage.

6. Réservoir de circulation destiné à la neutralisation de condensats de gaz de fumée et d'effluents gazeux, caractérisé par un cylindre (10), lequel est muni d'un couvercle (12) dévissable, d'une amenée (14) dans le fond, pouvant être dévissable, du réservoir et une évacuation (16) dans le couvercle du réservoir et conçu pour recevoir une cartouche de neutralisation (11), le cylindre (10) comportant un guidage et une possibilité d'encliquetage pour la came et le guidage de la cartouche (11).

7. Réservoir de circulation selon la revendication 6, caractérisé en ce que le cylindre est en une matière synthétique transparente.

8. Réservoir de circulation selon la revendications 6 ou 7, caractérisé en ce qu'en amont de la tubulure d'amenée (14) et en aval de la tubulure d'évacuation (16) sont agencés des siphons (20, 26).

9. Réservoir de circulation selon la revendication 6, caractérisé en ce que dans le cylindre (10) est prévu un dispositif (27) qui indique si du condensat acide ou neutre quitte le réservoir de circulation.

FIG. 1a

FIG. 1b

# FIG. 2